Europäisches Patentamt

European Patent Office

Office européen des brevets

(11) Veröffentlichungsnummer: **0 547 487 A1**

## (12) EUROPÄISCHE PATENTANMELDUNG

(21) Anmeldenummer: **92120951.6**

(22) Anmeldetag: **09.12.92**

(51) Int. Cl.$^5$: **C02F 1/26**

(30) Priorität: **18.12.91 DE 4141772**

(43) Veröffentlichungstag der Anmeldung:
**23.06.93 Patentblatt 93/25**

(84) Benannte Vertragsstaaten:
**AT BE CH DE DK ES FR GB IT LI LU NL SE**

(71) Anmelder: **HOECHST AKTIENGESELLSCHAFT
Postfach 80 03 20
W-6230 Frankfurt am Main 80(DE)**

(72) Erfinder: **Diekhaus, Gerhard, Dr. Dipl.-Chem.
Walsumermarkstrasse 89
W-4200 Oberhausen(DE)**
Erfinder: **Kappesser, Harald
Waidmannsweg 24
W-4200 Oberhausen(DE)**

(54) **Verfahren zur Aufarbeitung organische Phosphorverbindungen, insbesondere sulfonierte Arylphosphine enthaltender Abwässer.**

(57) Abwässer, die neben wasserlöslichen anorganischen Salzen wasserlösliche, organische Phosphorverbindungen, insbesondere sulfonierte Arylphosphine und gegebenenfalls weitere organische Verunreinigungen enthalten, werden zur Aufarbeitung zunächst mit einer anorganischen Säure versetzt und darauf mit einem in Wasser unlöslichen Amin extrahiert. Nach einer besonderen Ausführungsform wird die anorganische Säure in Form eines Salzes des als Extraktionsmittel verwendeten Amins angewandt.

EP 0 547 487 A1

Die Erfindung betrifft die Aufarbeitung wasserlösliche organische Phosphorverbindungen, insbesondere sulfonierte Arylphosphine und gegebenenfalls weitere organische Verunreinigungen und daneben wasserlösliche Sulfate enthaltender Abwässer. Ziel des neuen Verfahrens ist es, die Abwässer so weit von unerwünschten Fremdstoffen zu befreien, daß sie in konventionelle Reinigungsanlagen eingeleitet oder als Prozeßwasser chemischen Umsetzungen wieder zugeführt werden können.

In den Arylresten sulfonierte Triarylphosphine haben, insbesondere zusammen mit Rhodiumverbindungen in Wasser gelöst, als Katalysatoren verbreitet Eingang in die chemische Technik gefunden. Man setzt sie u.a. mit Erfolg bei der Hydroformylierung von Olefinen ein (vgl. DE 26 27 354 B1), addiert in ihrer Gegenwart cyclische Amine an konjugierte Diene (vgl. EP 01 76 398 A1) oder verwendet sie als Katalysatoren für die Hydrierung organischer Verbindungen.

Zur Herstellung sulfonierter Triarylphosphine geht man nach einem bewährten Verfahren (DE 32 35 030 A1) von Triarylphosphinen aus, die mit Oleum umgesetzt werden. Das Sulfonierungsgemisch wird hydrolysiert und mit einem in einem wasserunlöslichen organischen Lösungsmittel gelösten wasserunlöslichen Amin extrahiert. Aus der organischen Phase gewinnt man das sulfonierte Triarylphosphin durch Behandlung mit der wäßrigen Lösung basischer Reagenzien. Als Basen für die Überführung der sulfonsauren Arylphosphine in die Wasserphase und gleichzeitig in das als Endprodukt gewünschte Salz sind die Hydroxide der Alkali- und Erdalkalimetalle, insbesondere Alkalihydroxid, Ammoniak, daneben auch die Alkalicarbonate geeignet. Es können aber auch wasserlösliche Amine eingesetzt werden, wie Methylamin, Ethylamin, Propylamin, Butylamin oder Ethanolamin. Um möglichst einheitliche Verbindungen zu erhalten, d.h. Verbindungen desselben Sulfonierungsgrades, erfolgt die Umsetzung mit der Base vorzugsweise abgestuft nach unterschiedlichen pH-Werten. Die Wertprodukte werden im Bereich von etwa pH 4,5 bis pH 7 erhalten. Unterhalb pH 4,5 und oberhalb pH 7 bis pH 12 werden aus der organischen Phase überwiegend Neben- und Folgeprodukte der Sulfonierung extrahiert; die in diesen pH-Bereichen anfallenden wäßrigen Lösungen stellen das Abwasser dar.

Je nach dem angewandten wasserlöslichen basischen Extraktionsmittel enthält das Abwasser zwischen 1 und 8 Gew.-% Alkalimetall-, Erdalkalimetall-, Ammonium- oder Alkyl-ammoniumsalze. Es ist durch wasserlösliche Phosphorverbindungen, insbesondere sulfonierte Arylphosphine und weitere organische Substanzen, die den CSB-Wert (etwa 5 bis 25 g/l) bedingen, belastet.

Der CSB-Wert, die Abkürzung CSB steht für chemischen Sauerstoffbedarf, ist eine Kenngröße für die Belastung von Gewässern durch organische Substanzen. Sie ist die als Sauerstoff-Äquivalent ausgedrückte Menge Kaliumdichromat, die von den oxidierbaren Inhaltsstoffen eines Liters Wasser verbraucht wird. Die Bestimmung des CSB-Wertes erfolgt nach einer normierten Arbeitsweise. Sie ist z.B. in Ullmanns Encyclopädie der Technischen Chemie, 4. Auflage (1981), Band 6, Seiten 376 ff, beschrieben.

Unter wasserlöslichen organischen Phosphorverbindungen sind vor allem sulfonierte Triarylphosphine zu verstehen, wobei im vorliegenden Fall der Begriff Phosphine in erweitertem Sinne unter Einschluß von Phosphinoxiden und Phosphinsulfiden verwendet wird. Ist das sulfonierte Triarylphosphin z.B. das Sulfonierungsprodukt des Tri-phenylphosphins, dann finden sich in dem Abwasser u.a. (in Klammern sind die im folgenden verwendeten Abkürzungen der Verbindungen aufgeführt) die Phosphine

Tri(m-sulfophenyl)phosphin            (TPPTS)
Di(m-sulfophenyl)phenylphosphin       (TPPDS)
Diphenyl(m-sulfophenyl)phosphin       (TPPMS)

ferner die durch Oxidation gebildeten Phosphinoxide

Tri(m-sulfophenyl)phosphinoxid             (TPPOTS)
Di(m-sulfophenyl)phenylphosphinoxid        (TPPODS)

und in kleinen Mengen die durch Reduktionsprozesse entstandenen Phosphinsulfide

Tri(m-sulfophenyl)phosphinsulfid            (TPPSTS)
Di(m-sulfophenyl)phenylphosphinsulfid       (TPPSDS)

Aus der EP 41 134 A2 ist es bekannt, wasserlösliche Salze aromatischer Sulfonsäuren aus Sulfiergemischen mit Hilfe wasserunlöslicher Amine abzutrennen. Zu diesem Zweck wird das Sulfiergemisch mit Wasser verdünnt und anschließend mit einer der Sulfonsäure äquivalenten Menge eines lösungsmittelfreien Amins vermischt. Die Sulfonsäure bildet ein lipophiles Ammoniumsalz, das sich spontan von der wäßrigen Phase trennt. Vorausgesetzt wird bei diesem präparativen Verfahren, daß das Sulfiergemisch im wesentlichen frei von unsulfoniertem Ausgangsmaterial und anderen Neutralsubstanzen ist. Eine solche Forderung erfüllen Abfallprodukte chemischer Prozesse im allgemeinen nicht, denn es ist nie auszuschließen, daß Neutralsubstanzen, wenn auch nur in geringen Mengen, durch Neben- und Folgereaktionen als Verunreinigungen gebildet werden. Überdies liegen Reinigungsoperationen keine präparativen Verfahren zugrunde; sie lassen sich eher als analytische Prozesse beschreiben, bei denen selbst nur in Spuren vorhandene Stoffe erfaßt und abgetrennt werden müssen.

Es bestand daher die Aufgabe, eine Arbeitsweise bereitzustellen, die es erlaubt, wasserlösliche organische Phosphorverbindungen und andere Verunreinigungen aus Abwässern sicher zu entfernen. Diese Arbeitsweise soll keinen Einschränkungen unterliegen und wirtschaftlich sein. Sie soll Wasser einer solchen Reinheit liefern, daß es in konventionelle Reinigungsanlagen oder Vorfluter eingeleitet oder, um Abwässer ganz oder teilweise zu vermeiden, in chemische Umsetzungen zurückgeführt werden kann.

Erfindungsgemäß wird die Aufgabe gelöst durch ein Verfahren zur Aufarbeitung von Abwässern, die neben wasserlöslichen anorganischen Salzen wasserlösliche organische Phosphorverbindungen, insbesondere sulfonierte Arylphosphine und gegebenenfalls weitere organische Verunreinigungen gelöst enthalten. Dadurch gekennzeichnet, daß man den Abwässern eine anorganische Säure in einer solchen Menge zusetzt, daß je mol in Lösung vorhandener Sulfonatreste ($-SO_3^-$) mindestens 1,1 mol Wasserstoffionen vorliegen, darauf mit mindestens einem mol eines in Wasser schwer oder unlöslichen Amins je mol gelöster Sulfonatreste extrahiert, organische und Wasserphase voneinander trennt und die organische Phase weiterverarbeitet.

Das erfindungsgemäße Verfahren stellt sicher, daß im Abwasser gelöste, organische Phosphorverbindungen, insbesondere sulfonierte Arylphosphine und weitere organische Verunreinigungen, die insgesamt als CSB-Wert gemessen werden, weitgehend entfernt werden. Die gereinigten Abwässer belasten die Umwelt nicht und können als Prozeßwasser für chemische Umsetzungen verwendet werden.

Das erfindungsgemäße Verfahren geht von Abwässern aus, die bei der Herstellung sulfonierter Arylphosphine anfallen. Welche individuelle Prozeßvarianten im Einzelfall angewendet werden, ist dabei ohne Bedeutung. Das im Rahmen der Schilderung des Standes der Technik genannte Verfahren ist lediglich als Beispiel angeführt, andere Herstellungsverfahren sind möglich. Ein wesentliches Merkmal der erfindungsgemäß eingesetzten Abwässer ist, wegen ihres Einflusses auf die Umwelt, die Konzentration der in ihnen gelösten Phosphorverbindungen. Sie beträgt in typischen Abwässern 400 bis 1500 Gew.-ppm, insbesondere 600 bis 1200 Gew.-ppm und ergibt sich z.B. bei der TPPTS-Synthese aus dem Gehalt an TPPTS, TPPDS, TPPOTS, TPPODS, TPPSTS und TPPSDS. Die genannten Phosphorverbindungen eingeschlossen enthalten die Abwässer insgesamt 1 bis 30 g/l, insbesondere 5 bis 25 g/l Verbindungen, die als CSB-Wert gemessen werden.

Die nach dem neuen Verfahren aufzuarbeitenden Abwässer werden zunächst angesäuert. Zu diesem Zweck versetzt man sie erfindungsgemäß mit einer solchen Menge einer anorganischen Säure, daß je mol in Lösung vorhandener Sulfonatreste mindestens 1,1 mol insbesondere 1,5 bis 3,0 mol Wasserstoffionen vorliegen. Ein höherer Säureüberschuß ist nicht schädlich, aber z.B. aus wirtschaftlichen Gründen, insbesondere aber auch um eine unnötige Belastung der Abwässer zu vermeiden, nicht erforderlich. Ist in den Abwässern neben Sulfonaten noch freie Base vorhanden, so ist die zu ihrer Neutralisation erforderliche Menge Wasserstoffionen zu der erfindungsgemäß anzuwendenden Menge Wasserstoffionen zu addieren.

Die Wasserstoffionen werden den Abwässern in Form starker anorganischer Säuren wie Salzsäure, Schwefelsäure, Salpetersäure und Phosphorsäure zugeführt. Besonders geeignet sind Schwefelsäure und Phosphorsäure. Bei Einsatz mehrbasiger Säuren wie Schwefelsäure oder Phosphorsäure ist die Menge der in das Abwasser eingebrachten Wasserstoffionen abhängig von der Säurekonstante der einzelnen Dissoziationsstufen. Man kann davon ausgehen, daß bis zu einer Säurekonstante von etwa $0,7 \cdot 10^{-2}$ eine vollständige Dissoziation der Wasserstoffionen erfolgt, also ein mol Säure ein mol Wasserstoffionen ergibt. Dementsprechend liefert ein mol Schwefelsäure als zweibasige Säure und einer Säurekonstante in der zweiten Dissoziationsstufe von $1,2 \cdot 10^{-2}$ zwei mol Wasserstoffionen, während die dreibasige Phosphorsäure entsprechend der Säurekonstante in der ersten Dissoziationsstufe von $0,75 \cdot 10^{-2}$ lediglich ein mol Wasserstoffionen ergibt.

Nach dem Ansäuern werden in einem zweiten Arbeitsschritt die in den Abwässern enthaltenen Verunreinigungen mit Hilfe eines Amins extrahiert, das in Wasser schwer oder nicht löslich ist. Die erforderliche Aminmenge ist ebenfalls abhängig von der Menge im Abwasser enthaltener Sulfonatreste. Je mol in der Lösung vorhandener Sulfonatreste setzt man dem Abwasser mindestens ein mol Amin und vorzugsweise 1 bis 4 mol Amin zu.

Statt den Abwässern zunächst Säure zuzusetzen und darauf die Verunreinigungen mit einem Amin zu extrahieren, kann man nach einer besonderen Ausführungsform des erfindungsgemäßen Verfahrens die benötigte Säure- und Aminmenge in Form eines Aminsalzes zugeben. Selbstverständlich sind in diesem Fall die verwendeten molaren Stoffmengen von Säure und Amin gleich. Da die Säure immer im Überschuß, bezogen auf gelöstes Sulfonat verwendet wird, liegt dann auch stets ein Aminüberschuß vor.

Zweckmäßig ist das zur Extraktion verwendete Amin unter den Bedingungen der Extraktion flüssig. Seine Wirkung beruht u.a. darauf, daß es mit den sauren Inhaltsstoffen des Abwassers unter Salzbildung reagiert. Die Aminsalze müssen in Wasser ebenfalls schwer, dagegen in organischen Lösungsmitteln leicht löslich sein. Eine andere Wirkungsweise des Amins beruht auf der rein physikalischen Lösung von in den Abwässern enthaltenen Verunreinigungen.

Als Amine, die mit Säuren in Wasser schwerlösliche, jedoch lipophile Salze bilden, kommen acyclische oder cyclische aliphatische, aromatische, araliphatische und heterocyclische primäre, sekundäre oder tertiäre, vorzugsweise sekundäre oder tertiäre Amine in Betracht. Bevorzugt werden acyclische, verzweigte oder unverzweigte aliphatische Amine mit insgesamt 10 bis 60, insbesondere 13 bis 36 Kohlenstoffatomen. Beispiele für solche Verbindungen sind Tri-n-hexylamin, Tri-n-octylamin, Tri-isooctylamin, Di-(2-ethylhexyl)-amin, Tri-isononylamin (in Form des Isomerengemisches), Isotridecylamin (in Form des Isomerengemisches), Di-isononyl-(2-phenylpropyl)-amin, Isononyl-di-(2-phenylpropyl)-amin, Tri-isotridecylamin (in Form des Isomerengemischs), N,N-dimethyl-hexadecylamin, N,N-dimethyl-octadecylamin. Als Extraktionsmittel besonders bewährt haben sich Isotridecylamin, Tri-n-octylamin und Tri-isooctylamin.

Grundsätzlich können die Amine zur Extraktion unverdünnt eingesetzt werden. Vorteilhafter ist es jedoch, sie als Lösung in einem mit Wasser nicht oder nur wenig mischbaren organischen Lösungsmittel zu verwenden. Die Konzentration des Amins in der Lösung kann sich über einen weiten Bereich erstrecken. Sie wird im wesentlichen durch die Löslichkeit der Aminsalze im Lösungsmittel und durch die Viskosität der anfallenden Salzlösung begrenzt. Dementsprechend enthalten die Lösungen üblicherweise 10 bis 50, vorzugsweise 15 bis 35 Gew.-% Amin. Für die Auswahl des Lösungsmittels sind vorwiegend seine physikalischen Eigenschaften maßgebend. Erwünscht sind geringe Löslichkeit in Wasser, geringe Verdunstung und geringe oder keine Neigung zur Bildung von Emulsionen. Das Lösungsmittel soll darüber hinaus inert, nicht toxisch und preisgünstig sein, gutes hydrodynamisches Verhalten zeigen und auch für sonstige in den Abwässern gelöste Verunreinigungen gutes Extraktionsvermögen besitzen. Geeignete Lösungsmittel sind kerosinähnliche Fraktionen, d.h. Kohlenwasserstoffe mit Siedetemperaturen zwischen 175 und 325 °C, Aromatenfraktionen, $C_4$-$C_{20}$-Alkohole, $C_8$-$C_{20}$-Ether. Bevorzugt werden kerosinähnliche Fraktionen und Toluol. Aminsalze werden stets in Form von Lösungen eingesetzt, wobei dieselben Lösungsmittel wie für die Amine zur Anwendung gelangen. Die Konzentration der Salze in der Lösung beträgt ebenfalls üblicherweise 10 bis 50, vorzugsweise 15 bis 35 Gew.-%.

Die Extraktion erfolgt in der Regel bei normaler Temperatur und normalem Druck, jedoch sind hiervon abweichende Bedingungen, z.B. erhöhter Druck, nicht ausgeschlossen.

Die Weiterverarbeitung der organischen Phase in einem dritten Arbeitsschritt zur Überführung der Verunreinigungen in eine konzentrierte wäßrige Lösung und zur Regenerierung des Amins kann auf verschiedene Weise erfolgen. So hat es sich bewährt, die Aminphase mit der wäßrigen Lösung einer anorganischen Base zu reextrahieren. Geeignete Verbindungen sind die Hydroxide der Alkali- und Erdalkalimetalle, insbesondere Natriumhydroxid, daneben auch die Alkalicarbonate. Die Base wird als 5 bis 30 Gew.-%ige Lösung eingesetzt und, bezogen auf Amin, vorzugsweise in stöchiometrischer Menge, gegebenenfalls in einem Überschuß bis zu 20 %, verwendet. Ein größerer Überschuß an Base fügt der wäßrigen Lösung, die die Verunreinigungen in konzentrierter Form enthält, einen weiteren, unerwünschten Lösungsbestandteil zu und sollte daher vermieden werden. Ein anderes, erfolgreich angewandtes Verfahren zur Aufbereitung der Aminphase ist ihre Behandlung mit Dampf. Zu diesem Zweck wird Dampf von mindestens 1,8 MPa in die Aminlösung eingeleitet. Die Verunreinigungen gehen dabei in die Wasserphase über, die z.B. durch Dekantieren von der Aminphase getrennt wird.

Das nach der Behandlung mit einer Base oder mit Dampf wiedergewonnene Amin kann zusammen mit dem gegebenenfalls eingesetzten Lösungsmittel erneut zur extraktiven Behandlung von Abwässern nach dem erfindungsgemäßen Verfahren eingesetzt werden. Von Zeit zu Zeit kann es, ebenso wie das Lösungsmittel, z.B. durch Destillation gereinigt werden.

Das erfindungsgemäße Verfahren wird diskontinuierlich und vorzugsweise kontinuierlich ausgeführt, wobei die für extraktive Stofftrennungen üblichen Apparate wie Extraktionskolonnen und Mixer-settler angewandt werden. Man kann ein- und mehrstufig arbeiten.

Die nachfolgenden Beispiele beschreiben die Erfindung, beschränken sie jedoch nicht auf diese speziellen Ausführungsformen.

Beispiele 1 bis 7

In den folgenden Beispielen werden Abwässer eingesetzt, deren Phosphorgehalt und CSB-Wert in der nachfolgenden Tabelle angegeben sind.

Abwasser, Schwefelsäure (29,9 Gew.-%, bezogen auf die wäßrige Lösung) und eine Lösung von Tri-isooctylamin in Toluol (etwa 20 Gew.-%, bezogen auf die Lösung) als Extraktionsmittel werden nacheinander in einen Rührwerksreaktor gegeben. Man rührt 30 min bei Raumtemperatur und trennt darauf die Wasserphase, d.h. das gereinigte Abwasser, von der Aminphase. Die Aminphase wird durch 30 min Rühren mit wäßriger NaOH-Lösung reextrahiert. Die nach Phasentrennung anfallende Wasserphase enthält konzentriert nahezu sämtliche Verunreinigungen des Abwassers, die Aminphase kann erneut als Extraktionsmittel eingesetzt werden. Die Reaktionsbedingungen und die Ergebnisse der Abwasseraufarbeitung sind ebenfalls in der Tabelle zusammengefaßt.

Die Beispiele 1 bis 4 beschreiben das neue Verfahren, in den Beispielen 5 bis 7 wird unter Bedingungen gearbeitet, die nicht denen der Erfindung entsprechen.

Tabelle

| Beispiel | eingesetztes Abwasser | | $H^+/RSO_3Na$ | Verhältnis *) $TiOA/RSO_3Na$ | $TiOA/H^+$ | gereinigtes Abwasser | |
|---|---|---|---|---|---|---|---|
| | P-Konzentration (Gew.-ppm) | CSB-Wert (mg/l) | (mol/mol) | (mol/mol) | (mol/mol) | P-Konzentration (Gew.-ppm) | CSB-Wert (mg/l) |
| 1    1 | 693 | 16,5 | 1,52 | 2,56 | 1,69 | 10,1 | 1,2 |
| 2   21 | 860 | 22,5 | 1,90 | 1,01 | 0,53 | 4,7 | 1,8 |
| 3   23 | 860 | 22,5 | 1,90 | 3,83 | 2,01 | 2,8 | 1,3 |
| 4   19 | 794 | 15,5 | 2,30 | 3,63 | 1,58 | 1,4 | 1,4 |
| 5   7 (Vgl.) | 816 | 17,9 | 1,03 | 3,47 | 3,36 | 70,0 | 5,2 |
| 6   8 (Vgl.) | 816 | 17,9 | 1,03 | 3,74 | 3,63 | 22,2 | 3,3 |
| 7   20 (Vgl.) | 794 | 15,5 | 1,03 | 2,22 | 2,16 | 14,8 | 1,6 |

*) TiOA = Tri-isooctylamin

EP 0 547 487 A1

**Patentansprüche**

1. Verfahren zur Aufarbeitung von Abwässern, die neben wasserlöslichen anorganischen Salzen wasserlösliche organische Phosphorverbindungen, insbesondere sulfonierte Arylphosphine und gegebenenfalls weitere organische Verunreinigungen gelöst enthalten, dadurch gekennzeichnet, daß man den Abwässern eine anorganische Säure in einer solchen Menge zusetzt, daß je mol in Lösung vorhandener Sulfonatreste ($-SO_3^-$) mindestens 1,1 mol Wasserstoffionen vorliegen, darauf mit mindestens einem mol eines in Wasser schwer oder unlöslichen Amins je mol gelöster Sulfonatreste extrahiert, organische und Wasserphase voneinander trennt und die organische Phase weiterverarbeitet.

2. Verfahren nach Anspruch 1, dadurch gekennzeichnet, daß in den Abwässern 1,5 bis 3,0 mol Wasserstoffionen je mol gelöster Sulfonatreste vorliegen.

3. Verfahren nach Anspruch 1 oder 2, dadurch gekennzeichnet, daß man als anorganische Säure Schwefelsäure oder Phosphorsäure einsetzt.

4. Verfahren nach einem oder mehreren der Ansprüche 1 bis 3, dadurch gekennzeichnet, daß man mit 1 bis 4 mol Amin extrahiert.

5. Verfahren nach einem oder mehreren der Ansprüche 1 bis 4, dadurch gekennzeichnet, daß man mit einem acyclischen verzweigten oder unverzweigten, sekundären oder tertiären aliphatischen Amin mit insgesamt 10 bis 60, insbesondere 13 bis 36 Kohlenstoffatomen extrahiert.

6. Verfahren nach Anspruch 5, dadurch gekennzeichnet, daß man als Amin Tri-isooctylamin einsetzt.

7. Verfahren nach Anspruch 1, dadurch gekennzeichnet, daß man den Abwässern anorganische Säure und Amin in Form eines Aminsalzes zusetzt.

8. Verfahren nach einem oder mehreren der Ansprüche 1 und 4 bis 7, dadurch gekennzeichnet, daß das Amin oder das Aminsalz in einem organischen Lösungsmittel gelöst sind.

9. Verfahren nach Anspruch 8, dadurch gekennzeichnet, daß das Amin oder das Aminsalz in kerosinähnlichen Fraktionen oder in Toluol gelost ist.

10. Verfahren nach einem oder mehreren der Ansprüche 1 und 4 bis 9, dadurch gekennzeichnet, daß die Konzentration des Amins oder des Aminsalzes in dem Lösungsmittel 10 bis 50, insbesondere 15 bis 35 Gew.-%, bezogen auf die Lösung beträgt.

11. Verfahren nach Anspruch 1, dadurch gekennzeichnet, daß die organische Phase durch Behandlung mit einem Alkali- oder Erdalkalihydroxid oder einem Alkalicarbonat oder durch Behandlung mit Dampf von mindestens 1,8 MPa weiterverarbeitet wird.

6

Europäisches
Patentamt

# EUROPÄISCHER RECHERCHENBERICHT

Nummer der Anmeldung

EP    92 12 0951

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-0 396 790 (BAYER ANTWERPEN)<br>* Seite 3, Zeile 23 - Zeile 31 *<br>* Seite 3, Zeile 50 - Seite 4, Zeile 19 *<br>--- | 1,5-9,11 | C02F1/26 |
| Y | GB-A-2 179 337 (CIBA-GEIGY AG)<br>* das ganze Dokument *<br>--- | 1,5-9,11 | |
| A | EP-A-0 293 849 (HOECHST AG)<br><br>* Seite 2, Zeile 45 - Seite 3, Zeile 6 *<br>* Seite 3, Zeile 42 - Zeile 54; Beispiel 10 *<br>--- | 6,7,10,11 | |
| A | CHEMICAL ABSTRACTS, vol. 81, no. 16,<br>21. Oktober 1974, Columbus, Ohio, US;<br>abstract no. 96135u,<br>Seite 306 ;Spalte L ;<br>* Zusammenfassung *<br>& JP-A-7 439 260 (MITSUBISHI CHEMICAL INDUSTRIES MASAYOSHI)<br><br>----- | 1,3,5,10,11 | |

**RECHERCHIERTE SACHGEBIETE (Int. Cl.5 )**

C02F

Der vorliegende Recherchenbericht wurde für alle Patentansprüche erstellt

| Recherchenort | Abschlußdatum der Recherche | Prüfer |
|---|---|---|
| DEN HAAG | 12 MAERZ 1993 | GONZALEZ ARIAS,M.L. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
...............................................................................
& : Mitglied der gleichen Patentfamilie, übereinstimmendes
   Dokument

EPO FORM 1503 03.82 (P0403)